# EUROPÄISCHE PATENTSCHRIFT

(11) **EP 0 569 788 B1**
(45) Veröffentlichungstag und Bekanntmachung des Hinweises auf die Patenterteilung: **26.01.2000**
(21) Anmeldenummer: 93106959.5
(22) Anmeldetag: 29.04.1993
(51) Int. Cl.: B65G 47/57, B65G 47/82, B65G 65/00

(54) **Be- und Entladeanordnung**
(Un)loader
Machine (dé)chargeuse

(30) Priorität: 15.05.1992 CH 168292; 20.04.1993 CH 119093
(43) Veröffentlichungstag der Anmeldung: 18.11.1993
(73) Patentinhaber: Hoegger, Cornel, CH-9230 Flawil (CH)
(72) Erfinder: Hoegger, Cornel, CH-9230 Flawil (CH)
(74) Vertreter: Frei, Alexandra Sarah

(56) Entgegenhaltungen:
- DE-A- 2 836 952
- DE-A- 3 320 737
- FR-A- 2 049 021
- FR-A- 2 468 544
- GB-A- 1 486 743
- GB-A- 2 019 802

## Beschreibung

Die vorliegende Erfindung betrifft eine Be- und Entladeanordnung für den Transport von Stückgut zu und von einem das Stückgut in einem Behandlungsgerät herumführenden Förderer in Form eines Tablare oder Körbchen fördernden Transportmittels, mit einer Zuführvorrichtung und einer Wegführvorrichtung und mit einer Übergabevorrichtung zur Entnahme der Stückgutes vom Förderer und Weitergabe zur Wegführvorrichtung und mit einer Übergabevorrichtung zur Beschickung des Förderers mit Stückgut von der Zuführvorrichtung.

Eine beispielsweise Anordnung dieser Art umfasst gemäss der GB-A-2 037 247 ein quer zu einem mit Stückgut zu beschickenden Förderband angeordneten Zubringer. An diesem und zwar an dessen, dem zu beschickenden Förderband abgewandten Ende sind Übergabemittel vorhanden, mit denen das auf dem Zubringer zugelieferte Stückgut einem weiteren Förderband in einer Behandlungsvorrichtung zu übergeben hat. Diese Übergabemittel umfassen eine Schubleiste mit einer dem Förderband entsprechenden Breite, die hin- und herbewegbar ist, um das Stückgut portionenweise auf das weitere Förderband zu übergeben.

Eine solche Anordnung dient nur einer Arbeitsweise, nämlich entweder dem Beladen oder dem Entladen. Damit zum Beispiel die Produkte - Charge eines Autoklaven in kurzer Zeit gewechselt werden kann, muss gleichzeitig in jeder Bewegungsrichtung ein Übergabemittel zur Entladung respektive zur Beladung vorhanden sein und dazu ist eine Be- und eine Entladevorrichtung erforderlich. Denn nur so kann ein Autoklav voll ausgenützt werden.

Aus der DE-A-28 36 952 ist es bekannt geworden, Gegenstände zur weiteren Verarbeitung von einem Transporthand mit dem die Gegenstände hintereinander zulaufen diese in bestimmter Anzahl auf eine Sammelstrecke zu schieben, um sie dann gemeinsam auf eine parallel dazu angeordnete LagerStrecke zu verschieben. Das Verschieben vom Transporthand erfolgt mit einem Stösser, um jeden Gegenstand einzeln mit einem Übergabeblech das unter jeweils einen Gegenstand geschoben zum Transport zur Sammelstrecke dient um dort den Gegenstand abzulegen. Auch eine derartige Anordnung kann nicht zur Be- und/oder Entladung von Tablaren oder dergleichen, die mit einer kontinuierlich laufenden Umlaufkette transportiert werden.

Dementsprechend ist es eine Aufgabe der Erfindung eine Be- und eine Entladeanordnung zu schaffen, mit der eine zeitsparende Beladung und Entladung eines Förderers in einem Behandlungsgerät, sei dies für einen Autoklaven oder für einen Speicher oder eines andern Behandlungsgerätes, wie zum Brühen, oder Kochen, oder zum Frosten, möglich ist.

Erfindungsgemäss wird dies durch die Be- und Entladeanordnung gemäß Anspruch 1 erreicht.

Nachfolgend wird die Erfindung an einem Ausführungsbeispiel näher erläutert. Es zeigen:
- Fig.5: eine Ausführungsform einer Be- und Entladeanordnung mit Trays an der Be- und Entladeseite eines Autoklaven,
- Fig.6: die Anordnung gemäss Fig.5 in Draufsicht, und
- Fig.7: dieselbe Ausführungsform in Seitenansicht in Ruhestellung.

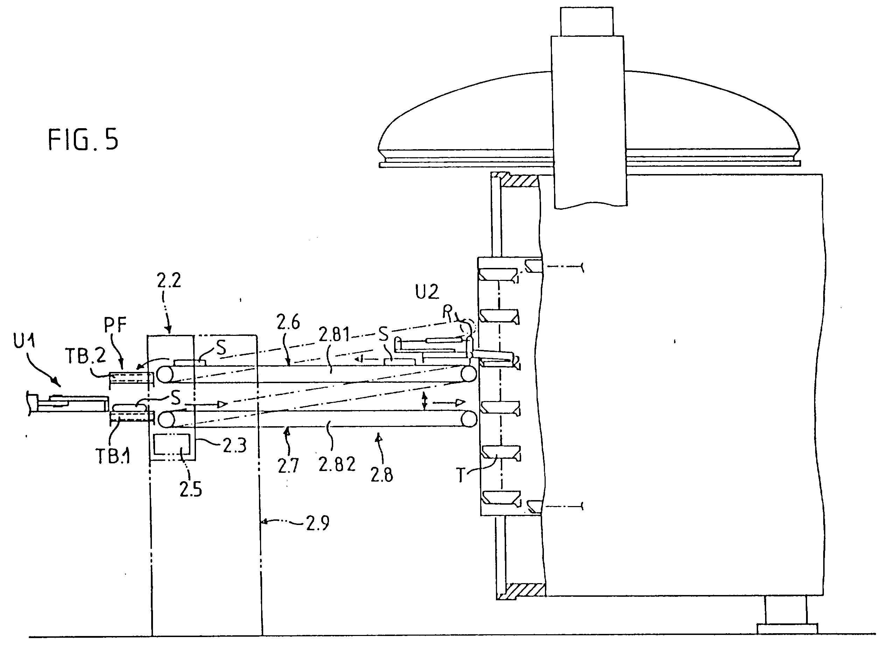

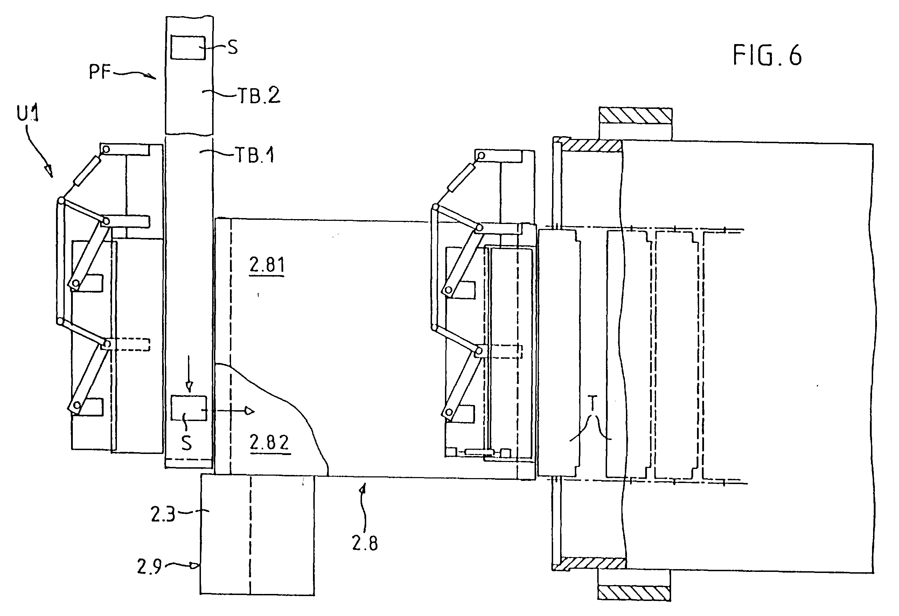

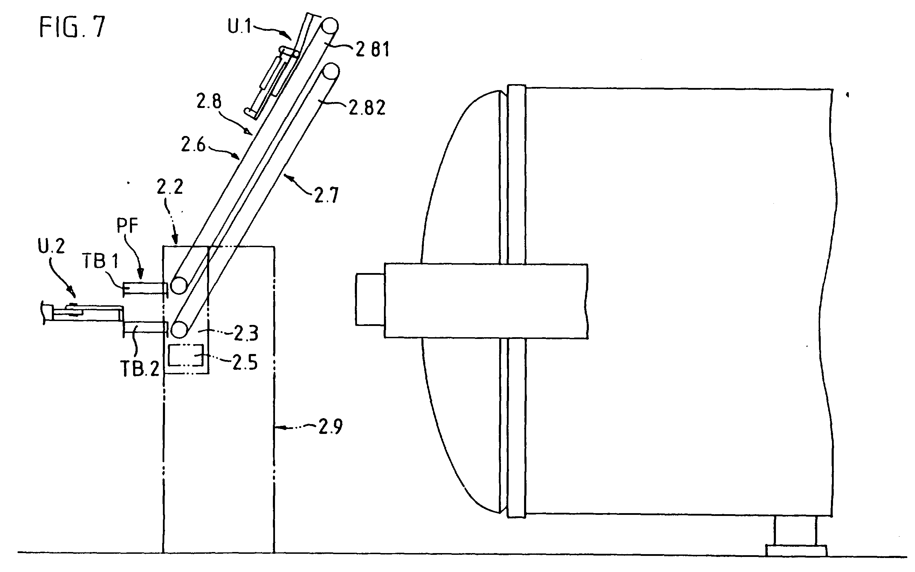

Fig.5 und 6 zeigen die Beladeseite eines Autoklaven, wobei mehrere Trays T auf dem Weg von einer obersten Bahn zu einer untersten Bahn auf einem vertikalen Hub dargestellt sind. Somit muss oben der Tray entladen werden und der darunter befindliche Tray kann dann beladen werden. Die Zu- und Wegführung des Stückgutes S erfolgt aber mittels einer Sekundär-Fördereinrichtung 2.8. Dabei ist links in der Figur die Primär-Fördereinrichtung PF mit den beiden Förderbändern TB.1 und TB.2 dargestellt. Mit einem Stösser, wird das von der Primär-Fördereinrichtung TB.2 herangebrachte Stückgut S auf das untere Förderband 2.82 der Sekundär-Fördereinrichtung 2.8 gestossen und mit diesem Sekundär-Förderband 2.82 direkt einem leeren Tray T übergeben.

Die Entnahme des behandelten Stückgutes S von einem oberen Tray T erfolgt mittels eines Rechens R oder Übergabevorrichtung U1, um auf das obere Förderband 2.81 der Sekundär-Fördereinrichtung 2.8 gebracht zu werden. Die Abgabe des Stückgutes S von diesem oberen Förderband 2.81 auf das obere Förderband TB.1 der Primär-Fördereinrichtung PF braucht keine besondere Einrichtung, sondern es wird einfach stufenähnlich abgegeben.

Mit dieser Anordnung kann, wie in Fig.5 mit unterbrochenen Strichen angezeigt die sekundäre Fördereinrichtung 2.8 mit einer Schwenkeinrichtung 2.2 mit einer Schwenksteuer und Antriebseinrichtung 2.3 versehen sein. Damit läuft das autoklavennahe Ende der Sekundär-Fördereinrichtung 2.8 einer kontinuierlichen Bewegung der Trays T im Autoklaven nach. Es entfällt damit der aufwendige Quadrantantrieb für die rasche Bewegung der Konsolen und auch die Steuerung für eine schrittweise Bewegung der Trays T. Die Trays können dabei mit gleichbleibender Geschwindigkeit im Autoklaven herumgeführt werden und die Be- und Entladung erfolgt mit der nachlaufenden Sekundären Fördereinrichtung 2.8.

Mit derselben Schwenkeinrichtung 2.2 kann die Sekundär-Fördereinrichtung 2.8 aus dem Be- und Entladebereich verfahren werden, wie in Fig.7 dargestellt ist, um so den Deckel des Autoklaven, der sich während der Be- und Entladung oberhalb des Autoklaven-Zylinders befindet, wie Fig 5 zeigt, vor die Autoklavenöffnung zu verschwenken, und diesen dadurch zu verschliessen.

Sollten an dem Förderer F im Autoklaven Unterhalts- und/oder Reparaturen durchgeführt werden, so muss die gesamte Einrichtung des Förderers F aus dem Zylinder herausgefahren werden können. Dies ist aber nur möglich, wenn entweder der Ständer 1.9 oder das Trägergestell nicht direkt vor der Be- und Entladeöffnung, sondern seitlich versetzt angeordnet sind.

## Patentansprüche

1. Be- und Entladeanordnung für das Be- und Entladen von Stückgut (S) in und aus einem Behandlungsgerät,
wobei Stückgut im Behandlungsgerät auf einem Förderer in Form eines bewegten Bandes oder eines Tablare (T) oder Körbchen fördernden Transportmittels herumgeführt wird
und Stückgut ausserhalb vom Behandlungsgerät auf einer Primärfördereinrichtung (PF) an die Be- und Entladeanordnung zu- und weggeführt wird, wobei
die Be- und Entladeanordnung einen Zuführförderer und Übergabevorrichtungen (U1,U2) aufweist,
der Zuführförderer zwei Ebenen aufweist, eine Ebene für das Zuführen von Stückgut und eine andere Ebene für das gleichzeitig damit erfolgende Wegführen von Stückgut und eine der Ebene eine Übergabevorrichtung (U2) zum Übergeben des Stückgutes vom Förderer zum Zuführförderer und die andere Ebene eine Übergabevorrichtung (U1) zum Übergeben des Stückgutes von der Primärfördereinrichtung zum Zuführförderer aufweist.

2. Anordnung nach Anspruch 1, **gekennzeichnet durch** eine auf einem Trägergestell (2.9) montierte, den Zuführförderer tragende Schwenkeinrichtung (2.2).

3. Anordnung nach Anspruch 2, **dadurch gekennzeichnet**, dass die Schwenkeinrichtung (2.2) für schrittweise Be- und Entladung des Förderers stationär am Trägergestell (2.9) gehaltert ist, und dass sie in Ruhelage aus dem Bereich vor dem Förderer ausschwenkbar ist.

4. Anordnung nach Anspruch 2, **dadurch gekennzeichnet**, dass die Schwenkeinrichtung (2.2) für kontinuierlichen Betrieb des Förderers für die Zeit des Be- und Entladens der Bewegung der Tablare oder Körbchen kontinuierlich nachführbar und sprungweise in die Ausgangslage rückführbar ist.

5. Anordnung nach Anspruch 2, **dadurch gekennzeichnet,** dass eine erste Übergabevorrichtung (U.1) zur Entnahme des Stückgutes vom Förderer direkt an dem nahe beim Förderer befindlichen Ende angeordnet, ist, und dass eine zweite Übergabevorrichtung (U.2) zur Beladung des Zuführförderers (2.8.2) nahe bei der Primär-Fördereinrichtung (PF) angeordnet ist.

6. Anordnung nach einem der Ansprüche 2 bis 4, **dadurch gekennzeichnet**, dass das Trägergestell (2.9) mit der Schwenkeinrichtung (2.2) seitlich neben dem Förderer angeordnet ist, um in Ruhestellung den Zuführförderer seitlich über den Förderer zu stellen.

## Claims

1. Loading and unloading arrangement for loading piece goods (S) into a handling unit and unloading them therefrom, it being the case that piece goods are circulated in the handling unit on a conveyor in the form of a moving belt or of a transporting means which conveys trays (T) or cages, and piece goods are fed to the loading and unloading arrangement, and discharged therefrom, outside the handling unit on a primary conveying apparatus (PF), it being the case that the loading and unloading arrangement has a feed conveyor and transfer means (U1, U2), the feed conveyor has two planes, one plane for feeding piece goods and another plane for simultaneously discharging piece goods, and one of the planes has a transfer means (U2) for transferring the piece goods from the conveyor to the feed conveyor and the other plane has a transfer means (U1) for transferring the piece goods from the primary conveying apparatus to the feed conveyor.

2. Arrangement according to Claim 1, characterized by a pivoting apparatus (2.2) which is installed on a carrier framework (2.9) and bears the feed conveyor.

3. Arrangement according to Claim 2, characterized in that the pivoting apparatus (2.2) is secured on the carrier framework (2.9) in a stationary manner for stepwise loading and unloading of the conveyor, and in that, in the rest position, it can be pivoted out of the region in front of the conveyor.

4. Arrangement according to Claim 2, characterized in that the pivoting apparatus (2.2), for continuous operation of the conveyor, during the loading and unloading, can be made to follow the movement of the trays or cages continuously and can be returned abruptly to the starting position.

5. Arrangement according to Claim 2, characterized in that a first transfer means (U.1), for removing the piece goods from the conveyor, is arranged directly at the end located in the vicinity of the conveyor, and in that a second transfer means (U.2), for loading the feed conveyor (2.8.2), is arranged in the vicinity of the primary conveying apparatus (PF).

6. Arrangement according to one of Claims 2 to 4, characterized in that the carrier framework (2.9) with the pivoting apparatus (2.2) is arranged laterally alongside the conveyor in order, in the rest position, to position the feed conveyor laterally over the conveyor.

## Revendications

1. Système de chargement et déchargement destiné a charger et décharge des articles unitaires (S) dans et hors d'un dispositif de traitement, les articles étant achemines vers le dispositif de traitement sur un convoyeur forme par un tapis roulant ou Un convoyeur transportant des plateaux (T) ou corbeilles, et les articles, à l'extérieur du dispositif de traitement, étant acheminés sur un transporteur primaire (PF) vers le système de chargement et déchargement et hors de celui-ci, lequel système de chargement et déchargement comprend un transporteur d'acheminement et des dispositifs de transfert (U.1, U.2), le transporteur d'acheminement est formé par deux plans, un plan destiné a l'acheminement des articles et un autre plan pour l'enlèvement, qui en résulte simultanément, des articles et l'un des plans comporte un dispositif de transfert (U.2) destine à transférer l'article du convoyeur vers le transporteur d'acheminement et l'autre plan comporte un dispositif de transfert (U. 1) destiné à transférer l'article du transporteur primaire vers le transporteur d'acheminement.

2. Système selon la revendication 1, caractérisé par un dispositif pivotant (2.2), monté sur un cadre de support (2.9) et portant le transporteur d'acheminement.

3. Système selon la revendication 2, caractérisé en ce que le dispositif pivotant (2.2) est maintenu en position immobile sur le cadre de support (2.9) en vue du chargement et déchargement, étape par étape, du convoyeur, et en ce qu'il peut pivoter hors de la zone en amont du convoyeur vers la position de repos.

4. Système selon la revendication 2, caractérisé en ce que le dispositif pivotant (2.2) peut être ramené dans la position de départ pour le fonctionnement continu du convoyeur pendant le chargement et déchargement en suivant, en continu et en discontinu, le mouvement des plateaux ou corbeilles.

5. Système selon la revendication 2, caractérisé en ce qu'un premier dispositif de transfert (U.1), destiné à prélever l'article sur le convoyeur est monte directement au niveau de l'extremité à proximité du convoyeur, et en ce qu'un deuxième dispositif de transfert (U.2) destiné à charger le transporteur d'acheminement (2.8.2) est monté à proximité du transporteur primaire (PF).

6. Système selon l'une quelconque des revendications 2 à 4, caractérisé en ce que le cadre de support (2.9) muni du dispositif pivotant (2.2) est monté à côté du convoyeur, afin de poser le transporteur d'acheminement au-dessus du convoyeur dans la position de repos.
